# NOUVEAU FASCICULE DE BREVET EUROPEEN

(11) **EP 1 912 517 B2**
(45) Date de publication et mention de la décision concernant l'opposition: **23.07.2025**
(45) Mention de la délivrance du brevet: 20.07.2016
(21) Numéro de dépôt: 06794237.5
(22) Date de dépôt: 27.07.2006
(51) Int. Cl.: A23L 5/00, A23L 9/10, A23L 19/00, A23P 20/00, A23C 9/13, A23G 3/34, A23G 3/28, A23C 9/133, A23C 9/154, A23G 3/20, B65B 1/04

(54) **PRODUIT ALIMENTAIRE MULTICOUCHE ET PROCÉDÉ POUR SA PRÉPARATION**
MEHRSCHICHTIGES LEBENSMITTELPRODUKT UND HERSTELLUNGSVERFAHREN DAFÜR
MULTILAYER FOOD PRODUCT AND METHOD FOR PREPARING SAME

(30) Priorité: 28.07.2005 FR 0508077
(43) Date de publication de la demande: 23.04.2008
(73) Titulaire: Société des Produits Nestlé S.A., 1800 Vevey (CH)
(72) Inventeur: MOREAU, Jean-Jacques, F-14340 Manerbe (FR); HOFMANN, Marion, F-14100 Lisieux (FR); SERRE, Jean-Emmanuel, F-14100 Le Mesnil-Eudes (FR)
(74) Mandataire: Santarelli
(86) Numéro de dépôt international: PCT/FR2006/001842
(87) Numéro de publication internationale: WO 2007/012765

(56) Documents cités:
- EP-A1- 0 634 111
- EP-A1- 0 770 332
- EP-A1- 0 853 888
- EP-A1- 1 348 340
- EP-A1- 1 518 465
- WO-A1-00/70960
- GB-A- 858 926
- US-A1- 2001 007 692

## Description

L'invention concerne un procédé d'obtention d'un produit alimentaire multicouche, tel que défini dans les revendications 1 à 18, en particulier un dessert multicouche, comprenant au moins une couche inférieure et une couche supérieure (ou couche de surface) qui présentent une incompatibilité relative à l'étalement de la couche supérieure, ladite couche inférieure ayant une faible viscosité, chaque couche étant à base de composants alimentaires thermiquement stables, dans lequel la couche supérieure (ou couche de surface) présente une répartition uniforme, en particulier lorsque ladite couche supérieure (ou couche de surface) est composée de matière grasse ou d'une matière alimentaire ayant une densité supérieure à celle de la couche inférieure.

Dans la suite de la description, on dénommera de préférence la couche supérieure « couche de surface » lorsque le produit alimentaire multicouche ne comprend que deux couches, à savoir une couche de produit à recouvrir et une couche de revêtement.

On entend par « couche inférieure » la couche de produit à recouvrir ou de composant alimentaire à recouvrir qui se trouve immédiatement en dessous de la couche supérieure (ou couche de surface), indépendamment du fait que le produit alimentaire multicouche final puisse comprendre une pluralité de couches inférieures et de couches de surface.

On entend par « produit alimentaire multicouche » un produit alimentaire comprenant au moins une couche inférieure et une couche supérieure telles que définies ci-dessus, la couche inférieure pouvant comprendre de manière non limitative tout composant alimentaire thermiquement stable, notamment à base de lait (fermenté ou non, battu ou non), de fruits, de céréales, d'oeufs etc.

Par « couche inférieure ayant une faible viscosité », on entend que, lors du dosage de la matière alimentaire constituant la couche supérieure, la couche inférieure n'est pas solide, c'est-à-dire qu'elle n'a pas de tenue propre et qu'elle est susceptible de s'étaler ou de couler si elle n'est pas contenue dans un récipient.

Ladite couche inférieure peut ainsi avoir une consistance fluide.

En particulier, ladite couche inférieure peut avoir une viscosité de l'ordre de 3000 à 25000 mPa.s, de préférence de l'ordre 8000 à 20000 mPa.s.

La mesure de viscosité peut être effectuée à l'aide d'un viscosimètre Brookfield RVDV II+, en utilisant un mobile 93, avec une vitesse de rotation de 5 rpm, à une température de 15°C.

De préférence, la mesure est effectuée dans le récipient contenant ladite couche inférieure, après environ un tour de de rotation du module, par exemple après 10 s.

La couche inférieure du produit alimentaire multicouche a une consistance Bostwick supérieure à 8 cm. La consistance Bostwick est définie par la mesure du parcours d'écoulement d'un produit sur un plan incliné à 20°C pendant 120 s. On peut, par exemple, utiliser pour effectuer cette mesure un appareil commercialisé par CSC Scientific Company Inc. (USA) ou Kinematica AG (CH).

Parmi les procédés connus pour l'obtention de desserts multicouche, les procédés de type pulvérisation sous pression (« sprayage ») sont largement utilisés. Cependant, du fait de l'apport d'énergie aux gouttes de matière grasse résultant de l'utilisation d'une pression, les gouttes percutent la surface du produit, qu'elles peuvent endommager, et la matière grasse est surtout distribuée en périphérie, entraînant une fragilité potentielle de cette couche au centre du pot, lors de transports et de manipulations.

Un procédé de ce type est décrit dans la demande EP-A-770 332.

EP-A-770 332 décrit un dessert multicouche comprenant au moins un composant traité à la chaleur, qui est constitué de mousse, de crème, de gelée et/ou de sauce, dans lequel ce composant est revêtu d'une couche stérilisée continue d'un glaçage de matière grasse ou de chocolat d'une épaisseur comprise entre 0,1 et 3 mm, ou dans lequel ces composants sont séparés par une couche stérilisée continue d'un glaçage de matière grasse ou de chocolat d'une épaisseur comprise entre 0,1 et 3 mm, et dans lequel le composant ou les composants présentent une consistance Bostwick inférieure à 8 cm.

Par ailleurs, lors de cette percussion, les gouttes de matière grasse peuvent emprisonner des microbulles d'air, ce qui est susceptible de conférer à la couche de matière grasse, notamment lorsqu'il s'agit de chocolat, un aspect mat non désiré.

On connaît également des procédés de type nébulisation, comme celui décrit dans la demande DE 2 239 986, utilisés par exemple pour la couverture de surfaces dures comme des gâteaux : dans ce cas, la matière grasse est véhiculée par de l'air comprimé à une courte distance sur la surface à couvrir, ce qui interdit son utilisation sur une surface molle.

Des procédés de glaçage, tels que le glaçage de gâteaux par une couche à base de sucre, c'est-à-dire la couverture d'une couche inférieure solide, sont également connus dans le domaine alimentaire. Dans de tels procédés, la couverture peut être effectuée par raclage de la matière de glaçage sur la couche inférieure solide et/ou par expulsion sous pression de la matière de glaçage.

EP 1 348 340 décrit un dessert laitier comprenant des motifs ornementaux constitués de bandes latérales alternées de différents produits, laitiers ou non-laitiers, notamment de couleurs différentes.

Le problème technique à résoudre consiste donc à obtenir un produit alimentaire multicouche dans lequel la couche supérieure (ou couche de surface) présente une répartition uniforme et un aspect satisfaisant pour le consommateur, en particulier lorsque la couche inférieure et la couche supérieure présentent une incompatibilité relative à l'étalement de la couche supérieure, c'est-à-dire que l'étalement ne peut se faire naturellement par simple dépose de la couche supérieure sur la couche inférieure.

Un tel cas se présente, par exemple lorsque la couche inférieure est hydrophile et la couche supérieure est hydrophobe, du fait des tensions hydrophiles /hydrophobes qui empêchent l'étalement, et/ou lorsque la couche inférieure présente une faible viscosité, dans la mesure où l'étalement ne peut pas être forcé sans provoquer la pénétration de la couche supérieure dans la couche inférieure.

On a maintenant trouvé qu'en effectuant la dépose de la matière alimentaire constituant la couche supérieure (ou couche de surface) sans apport de pression et sans utilisation d'air comprimé, et en appliquant à la couche inférieure une force permettant l'étalement de la couche supérieure, qui pallie cette incompatibilité, on pouvait obtenir une couche supérieure de matière alimentaire uniforme, continue dans le cas où la couche inférieure a une faible viscosité.

Selon le procédé de l'invention, la matière alimentaire constituant la couche supérieure (ou couche de surface) est soumise à une libération maîtrisée de manière mécanique par de multiples orifices, alors que le pot contenant le produit à recouvrir est soumis à une force centrifuge et/ou alternative.

Par « force alternative », on entend que le récipient est soumis à un mouvement alternatif, par exemple un déplacement latéral.

Selon un aspect préféré, la matière alimentaire constituant la couche supérieure (ou couche de surface) est une matière grasse.

Dans ce cas, le procédé selon l'invention permet avantageusement, malgré la nature hydrophobe des gouttes de matière grasse, et la nature éventuellement hydrophile de la surface sur laquelle elles sont déposées, une dépose uniforme en couche mince, continue, sans abîmer la structure de la surface du produit à couvrir.

De plus, le procédé selon l'invention permet l'obtention d'un produit alimentaire multicouche dans lequel la couche supérieure (ou couche de surface) est uniformément distribuée.

Avantageusement, ladite couche supérieure (ou couche de surface) présente une meilleure résistance aux chocs du fait de cette répartition uniforme que les produits obtenus par les procédés de l'art antérieur et un aspect plus esthétique (pas de projections sur les bords du pot), tout en conservant la facilité de cassure à la cuillère. Cette résistance à la cassure est aussi quantifiable par une analyse de texture et un test de rupture (Mesure avec Analyseur de Texture TAXT2 de la société Stable Micro Systems, cylindre 4mm de diamètre SMS P/4, vitesse 0,5 mm/s, profondeur 2 mm). Elle est, de préférence, supérieure ou égale à 200 g.

Par « répartition uniforme », on entend que, après dépose, la couche supérieure (ou couche de surface) a sensiblement la même épaisseur en tout point de sa surface.

Ledit procédé est particulièrement approprié dans le cas de produits laitiers acides ou fermentés qui présentent une faible viscosité et pour lesquels il est difficile de déposer une couche de surface sans abîmer la surface de la couche inférieure.

Par « produit laitier acide ou fermenté », en entend un produit à base de lait fermenté ou de lait acidifié, ayant un pH acide ou neutre, tel que, par exemple, un fromage blanc, un produit fermenté contenant des ferments vivants, tel qu'un yaourt ou une spécialité à base de lait fermenté. L'acidification peut être effectuée, par exemple, à l'aide d'acide lactique, citrique ou phosphorique. Les ferments, peuvent, par exemple, être choisis parmi *Lactobacillus casei, Lactobacillus bulgaricus, Lactobacillus acidophilus, Streptococcus thermophilus, bifidus* etc.

Le procédé selon l'invention fait appel à la combinaison de moyens de dosage, de moyens de distribution et de moyens de positionnement du récipient contenant le produit à recouvrir.

Le procédé selon l'invention comprend les étapes consistant à :
doser la matière alimentaire constituant la couche supérieure (ou couche de surface),
distribuer ladite matière à l'aide d'un boisseau mécanique rotatif à travers une plaque munie d'orifices multiples sur la surface d'un produit à recouvrir constituant au moins une couche inférieure préalablement contenu dans un récipient, et
simultanément, soumettre ledit récipient à une force centrifuge ou alternative,
ladite couche inférieure a une faible viscosité, la couche inférieure et la couche supérieure présentent une incompatibilité relative à l'étalement de la couche supérieure, le dosage de la matière alimentaire constituant au moins une couche supérieure est effectué à l'aide d'un piston doseur, la poussée du piston doseur libérant la matière alimentaire constituant au moins une couche supérieure par le seul effet de la force de gravité de ladite matière alimentaire, et ladite matière est distribuée à l'aide d'un boisseau mécanique rotatif à travers une plaque munie d'orifices multiples.

Des conditions préférentielles du procédé peuvent être choisies parmi les suivantes :
au moins une couche inférieure est hydrophile et au moins une couche supérieure est hydrophobe ;
la matière alimentaire constituant la couche supérieure (ou couche de surface) est une matière grasse ;
la poussée du piston doseur est maîtrisée de manière à ne pas donner d'énergie cinétique aux gouttes à déposer.
le dosage de la matière alimentaire constituant la couche supérieure (ou couche de surface), lorsqu'elle présente une viscosité élevée (jusqu'à 30000 mPa .s), peut être effectué à l'aide d'une pompe positive ;
la force appliquée au récipient est, de préférence ajustée pour provoquer le déplacement des gouttes de matière alimentaire constituant la couche supérieure (ou couche de surface), et non celui du produit à recouvrir constituant au moins une couche inférieure contenu dans le récipient ; en particulier, on peut exercer une force centrifuge par la rotation du pot de l'ordre de 1 à 5 s<-1> , notamment de l'ordre de 1 à 3,5 s<-1> pour des produits fluides, et de l'ordre de 3 à 5 s<-1> pour des produits plus visqueux ;
la température lors de la libération de la matière alimentaire constituant la couche supérieure (ou couche de surface) est ajustée de manière à maintenir la matière alimentaire en phase liquide, par exemple de l'ordre de 30 à 75°C, préférentiellement 60 à 70°C.

Par « boisseau mécanique rotatif », encore appelé clapet tournant, on entend une pièce mécanique, usinée préférentiellement avec une surface plate, qui, sous l'action de la rotation, vient dégager, progressivement et de façon maîtrisée, l'ensemble des orifices de distribution situés sur la plaque munie desdits orifices (plaque de buse). La dose libérée par chaque orifice est, par cet intermédiaire, sensiblement la même.

Avantageusement, le procédé selon l'invention permet également de résoudre le problème de bouchage de la buse, souvent rencontré lors de l'utilisation de procédés de pulvérisation sous pression (« sprayage »).

En effet, les orifices de la plaque de buse utilisée dans le procédé de l'invention peuvent avoir un diamètre de l'ordre de 0,5 à 4 mm, ce qui permet l'inclusion de particules dans la matière alimentaire constituant la couche supérieure (ou couche de surface).

Du fait des larges possibilités d'adaptation du procédé selon l'invention, il n'y a pas de limitation particulière à observer pour le choix de la matière alimentaire constituant la couche supérieure (ou couche de surface).

Selon un aspect du procédé selon l'invention, le produit final comprend une seule couche inférieure de composant alimentaire à recouvrir, et une seule couche supérieure (ou couche de surface) de matière alimentaire.

La matière alimentaire constituant la couche supérieure et la matière alimentaire constituant la couche inférieure doivent pouvoir être traitées thermiquement pour respecter les règlementations en vigueur, en particulier être stérilisées ou pasteurisées.

A titre d'exemples non limitatifs comme matière alimentaire constituant la couche supérieure, on peut citer les matières grasses ou les mélanges de matières grasses choisies parmi le chocolat, des matières grasses végétales de type beurre de cacao ou autre, comme par exemple la araisse de coprah durcie. ou des produits composés à base de chocolat

Par chocolat, on entend un mélange de beurre de cacao, de cacao en poudre ou de liqueur de cacao, de sucre et d'arômes, avec une teneur en beurre de cacao de 50 à 90% en poids du mélange.

On peut également utiliser des produits composés à base de chocolat (en anglais « compounds ») comprenant, par exemple, un mélange de beurre de cacao ou d'une autre matière grasse végétale, telle que par exemple la graisse de coprah durcie, de cacao en poudre ou de liqueur de cacao, d'eau, d'arômes naturels ou artificiels, comme par exemple de la vanille, et des édulcorants, avec une teneur en beurre de cacao ou autre matière grasse végétale de 50 à 100% en poids du mélange.

Ladite matière alimentaire peut également être choisie parmi les sirops de sucres (sirop de glucose, sirop d'érable, caramel etc.), les produits à base de fruits (coulis, marmelade, compote, purée etc.), les produits à base de lait (crème épaisse etc .), seuls ou en mélange avec un ou plusieurs additifs alimentaires, tels que des agents épaississants et/ou gélifiants et/ou texturants, par exemple, des galactomannanes, des pectines, des alginates, des carraghénanes, de la gomme de xanthane, de la gélatine et/ou des amidons.

Elle peut également comprendre un ou plusieurs ingrédients choisis parmi les colorants naturels ou artificiels ou les arômes naturels ou artificiels.

Elle peut également contenir des additifs solides sous forme particulaire tels que, par exemple des fragments de fruits secs ou confits ; des fragments de noix, de noisettes, d'amandes, d'écorces d'agrumes ; des céréales, des vermicelles de confiserie etc.

Le procédé selon l'invention permet l'inclusion desdits additifs solides particulaires dans la matière alimentaire constituant la couche supérieure (ou couche de surface), dans laquelle ils peuvent être traités thermiquement, en particulier stérilisés. Après dépose de ladite couche, lesdits additifs solides particulaires peuvent apparaître à la surface de la couche supérieure, sans en altérer la répartition uniforme.

Dans une alternative du procédé, une seconde couche de matière alimentaire peut recouvrir la première, lesdits additifs solides particulaires se trouvant alors entre les deux couches de surface.

Selon une autre alternative, on peut ajouter lesdits additifs solides particulaires sur la couche de surface après dépose de celle-ci et avant son refroidissement total.

Le produit à recouvrir, constituant au moins une couche inférieure, est une matière alimentaire pouvant être traitée thermiquement, la couche inférieure et la couche supérieure présentant une incompatibilité relative à l'étalement de la couche supérieure.

A titre d'exemples non limitatifs, on peut citer les produit laitiers acides ou fermentés, tels que, par exemple, les yaourts ou les fromages frais, les mousses (produit laitier battu), les crèmes (phase lactée contenant des gélifiants) ou encore un produit à base de fruits (compote, mousse de fruit), les produits à base de céréales (phase lactée contenant des céréales en semoule ou en grains), les produits fermentés à base de céréales, les produits à base d'oeufs comme les crèmes aux oeufs ou les produits à base de soja.

Ledit produit à recouvrir peut notamment avoir une consistance Bostwick, telle que définie plus haut, supérieure à 8 cm.

Alternativement, il peut avoir une viscosité de l'ordre de 3000 à 25000 mPa.s, de préférence de l'ordre 8000 à 20000 mPa.s.

Le procédé selon l'invention est mis en oeuvre lorsque le produit constituant la couche inférieure et les caractéristiques de la couche de la matière alimentaire constituant la couche supérieure (ou couche de surface) à déposer à sa surface présentent une incompatibilité.

On peut par exemple citer les cas suivants :
- la dépose d'une couche de matière grasse sur une couche inférieure hydrophile, par exemple une couche de chocolat sur une crème dessert;
- la dépose d'une couche de matière alimentaire constituant la couche supérieure (ou couche de surface) de forte densité sur une recette plus légère, par exemple, un sirop de sucre concentré sur une base bien plus fluide, une purée de fruit sur un yaourt brassé ;
- la dépose d'un produit mi-solide extrudé par la buse de dosage, par exemple, de la gélatine en phase de durcissement ou du chocolat à 25°C sur une crème fluide.

Lorsque la couche supérieure est une couche de surface, on peut également déposer sur celle-ci, à titre de décor, une mousse ou une crème fouettée ou des particules tels que des fragments de fruits secs ou confits ; des fragments de noix, de noisettes, d'amandes, d'écorces d'agrumes ; des céréales ou des vermicelles de confiserie.

Le procédé selon l'invention permet notamment une dépose de la couche supérieure (ou de surface) ayant un aspect déterminé, suivant la forme des orifices de la buse et, la façon dont sont ouverts ces orifices.

On peut ainsi réaliser la dépose d'une couche aérée d'un produit dense, comme par exemple des vermicelles de gélatine, ou toute autre forme dépendant des orifices de la buse (lanières plates, larges etc).

Selon un aspect avantageux de l'invention, le procédé décrit plus haut peut être utilisé pour réaliser des séparations multicouches dans le but de limiter les échanges entre deux masses.

On peut ainsi séparer par une couche de surface une première masse de composant alimentaire constituée, par exemple, par un composant acide tel qu'un coulis de fruit ou une phase lactée battue, telle qu'une crème fouettée ou une crème chantilly, ou encore un produit laitier acide ou fermenté, d'une seconde masse constituée, par exemple, d'une autre phase lactée, telle qu'une mousse ou une crème, les deux masses pouvant se trouver dans l'ordre inverse par rapport à la couche de surface qui les sépare.

Dans ce cas, on procède par exemple de la manière suivante : on effectue le dosage de la première masse, puis le dosage de la couche de surface, puis le dosage de la deuxième masse.

L'épaisseur de la couche supérieure (ou couche de surface) peut être adaptée en fonction du résultat voulu, sans limitation technique ; elle sera de préférence comprise, entre 0,3 mm à 6 mm, en particulier entre 0,5 et 1,5 mm, de façon à conserver la couche agréablement cassante avec la cuillère lorsqu'il s'agit d'une couche à base de matière grasse telle que par exemple du chocolat ou un produit composé à base de chocolat.

La dépose d'une couche supérieure plus épaisse n'offre aucune difficulté et peut être obtenue par des techniques de dosage à la portée de l'homme du métier.

L'invention concerne également, selon un objet ultérieur, un produit alimentaire multicouche, notamment un dessert multicouche, susceptible d'être obtenu par le procédé décrit plus haut, comprenant au moins une couche inférieure et une couche supérieure (ou couche de surface), chaque couche étant à base de composants alimentaires thermiquement stables dans lequel ladite couche supérieure (ou couche de surface) présente une répartition uniforme et, dans lequel ladite couche inférieure a une faible viscosité, et dans lequel ladite couche inférieure présente une consistance Bostwick supérieure à 8 cm.

D'autres produits alimentaires multicouches préférés sont ceux dont la couche inférieure a une viscosité d'environ 3000 à 25000 mPa.s, de préférence d'environ 8000 à 20000 mPa.s.

L'invention concerne en outre un dispositif, tel que défini dans la revendication 19, pour la mise en oeuvre du procédé selon l'invention, comprenant des moyens de dosage de la matière alimentaire constituant la couche supérieure (ou couche de surface) par le seul effet de la force de gravité de ladite matière alimentaire, des moyens de distribution et de moyens de positionnement du récipient contenant le produit à recouvrir.

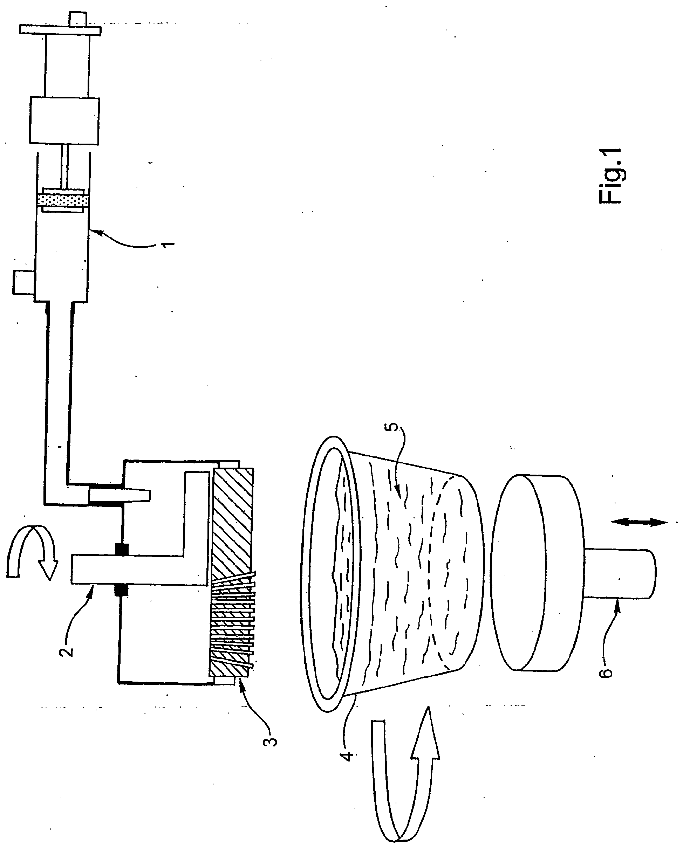

Un exemple d'un tel dispositif est représenté sur la figure 1, qui montre un piston doseur (1) destiné à pousser la matière alimentaire constituant la couche supérieure (ou couche de surface) relié à un boisseau rotatif (2) susceptible de libérer les multiples orifices d'une plaque de buse (3), et un récipient (4) contenant le produit à recouvrir (5), ledit récipient pouvant être assujetti à un système de montée et de baisse rotatif (6) permettant son positionnement et son mouvement.

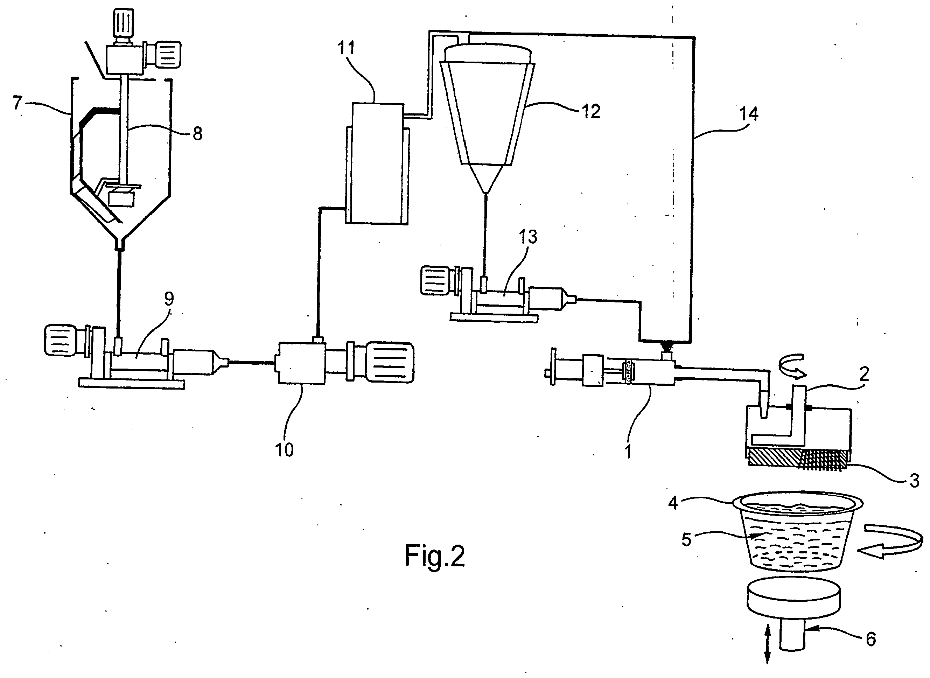

La figure 2 est une représentation schématique d'un exemple de dispositif pour la mise en oeuvre du procédé selon l'invention permettant la production et le dosage de la couche supérieure (ou couche de surface) et l'obtention d'un produit alimentaire multicouche comprenant une couche inférieure de produit à recouvrir et une couche de surface : dans une cuve (7), on ajoute les différents constituants de la matière alimentaire constituant la couche de surface. Le mélangeur (8) assure un mélange homogène, qui est stérilisé à haute température. La pompe (9) envoie la masse stérilisée vers un système d'homogénéisation dynamique (10), et le produit est ramené à une température inférieure à la température de stérilisation par un échangeur thermique (11), puis stocké dans une cuve (12) qui alimente une pompe (13) reliée à un piston doseur (1) relié à un boisseau rotatif (2) susceptible de libérer les multiples orifices d'une plaque de buse (3), et un récipient (4) contenant le produit à recouvrir (5), ledit récipient étant assujetti à un système de montée et de baisse rotatif (6). La matière alimentaire excédentaire constituant la couche de surface est renvoyée par un circuit (14) dans la cuve (12).

L'invention est illustrée non limitativement par les exemples ci-dessous :

### Exemple 1 : préparation d'une crème dessert saveur vanille et d'un crème dessert saveur chocolat, recouvertes d'une couche de matière alimentaire à base de chocolat

On a préparé les produits alimentaires multicouches dont la composition est indiquée dans le tableau 1 ci-dessous :

**Tableau 1**

| Ingrédients | crème dessert vanille (% en poids) | crème dessert chocolat (% en poids) |
|---|---|---|
| lait écrémé | 60 à 70 | 60 à 70 |
| sirop de glucose | 0 à 12 | 0 à 12 |
| crème 30% M.G | 1 à 20 | 1 à 20 |
| sucre - saccharose | 4 à 12 | 4 à 12 |
| protéines de lait | 0 à 4 | 0 à 4 |
| amidon modifié E1442 | 1 à 3,5 | 1 à 3,5 |
| carraghénanes | 0,05 à 0,5 | 0,05 à 0,5 |
| arôme et colorant | 0,1 à 1,2 | 0 à 0,5 |
| poudre de cacao à 10-12 ou 20-22% M.G | - | 1 à 3,5 |
| Chocolat | - | 1 à 6 |
| TOTAL | **100** | **100** |

On procède de la manière suivante :
1-On pré-mélange les ingrédients pulvérulents, puis on humidifie le mélange avec le lait chaud. On ajoute la crème et le chocolat fondu à 38°C et on soumet à un traitement UHT à 130°C pendant quelques s. Après refroidissement entre 10 et 20°C, la crème dessert est stockée en cuve en attente de dosage. Le transfert vers l'unité de dosage se fait au moyen d'une installation de pompage.
2-Pour la couche supérieure, on procède de la manière suivante : on pré mélange les ingrédients pulvérulents et on ajoute dans le beurre de cacao et le chocolat fondu à 38°C. Ce mélange subit un traitement thermique de stérilisation, par exemple entre 110°C et 120°C pendant 8-15 min, le traitement étant adapté en fonction de l'activité de l'eau. Avant le refroidissement entre 60-70°C, le produit subit un traitement d'homogénéisation afin de rendre le produit lisse. Le stockage se fait en cuve en attente de dosage à une température de 60 - 70°C. Le transfert vers l'unité de dosage se fera au moyen d'une installation de pompage.
3-Pour le dosage : on remplit le récipient en premier avec la crème dessert à une température de 10 à 20°C. Par exemple, dans un pot plastique de 110 ml de volume total et de diamètre 95 mm, on dose 90 g de crème dessert. Ensuite le récipient est amené sous le doseur de la couche supérieure, on procède alors par la montée de ce récipient au moyen d'un vérin à une hauteur voulue de la plaque de la buse, soit de 20 à 60 mm. Le dosage de la couche supérieure se fait en même temps que la rotation du pot afin de favoriser l'étalement harmonieux de cette couche, la force étant est alors de 3 à 5 s⁻¹. La température de dosage de la couche supérieure est réglable entre 50 et 60°C pour favoriser l'écoulement selon la surface de la couche inférieure. La quantité de couche supérieure déposée est réglée à 6 à 10 g par pot pour un pot de 100 ml.

On obtient une couche de surface uniforme ayant une épaisseur de 0,5 à 3 mm. A la fin de ce dosage, on maintient la rotation du pot jusqu'à la descente du pot et son passage à l'étape de scellage d'un opercule et ensuite de l'emballage et groupage si nécessaire. Le produit est mis alors à refroidir jusqu'à l'obtention d'une température à coeur inférieure à 6°C.

### Exemple 2 : préparation d'un yaourt brassé recouvert d'une couche de matière alimentaire à base de fruits

On a préparé le produit alimentaire multicouche dont la composition est indiquée dans le tableau 2 ci-dessous :

**Tableau 2**

| Ingrédients | % en poids |
|---|---|
| lait écrémé | 70 à 80 |
| crème 30% M.G | 1 à 12 |
| sucre - saccharose | 6 à 10 |
| protéines de lait | 1,5 à 4 |
| souches de yaourt / culture | 1 à 3 |
| arôme et colorant | qsp |
| préparation à base de fruits | qsp |
| **TOTAL** | **100** |

On procède de la manière suivante :
1-On pré-mélange les ingrédients pulvérulents, puis on humidifie le mélange avec le lait. On ajoute de la crème si nécessaire, et on soumet à une pasteurisation à 90-105°C pendant quelques min. Après homogénéisation à une pression de 50 à 300 bars, on refroidit à une température de fermentation d'environ 40°C et on ensemence avec les ferments du yaourt (*Lactobacillus bulgaricus* et *Streptococcus thermophilus*). On laisse fermenter dans la cuve jusqu'à un pH de 4,1 à 4,7, puis on agite et on refroidit à 10°C. Le stockage se fait en cuve en attente de dosage. Le transfert vers l'unité de dosage se fera au moyen d'une installation de pompage.
2-Pour la couche supérieure, on utilise une préparation pasteurisée à base de fruits (50 -60%), de sucres et de sirop de glucose (20 à 40%) et, selon le fruit, avec une stabilisation à base de pectine ou gomme xanthane. Cette préparation est stockée dans une cuve ou un container, le transfert vers l'unité de dosage se fait au moyen d'une installation de pompage.
3-Pour le dosage : on remplit le récipient en premier avec le yaourt brassé à une température de 10 à 20°C. Par exemple, dans un pot plastique de 110 ml de volume total, on dose 90 g de yaourt brassé. Ensuite, le récipient est amené sous le doseur de la couche supérieure, et on procède à la montée de ce récipient au moyen d'un vérin à une hauteur voulue de la plaque de la buse, soit de 20 à 60 mm. Le dosage de la couche supérieure se fait en même temps que la rotation du pot afin de favoriser l'étalement harmonieux de cette couche, la force centrifuge est alors de 1 à 3 s⁻¹. La température de dosage de la couche supérieure réglée entre 30 et 40°C. La quantité de couche supérieure déposée est réglée à 8 à 12 g par pot pour un pot de 100 ml. On obtient une couche de surface uniforme ayant une épaisseur de 0,8 à 3 mm. A la fin de ce dosage, on maintient la rotation du pot jusqu'à la descente du pot et son passage à l'étape de scellage d'un opercule et ensuite de l'emballage et groupage si nécessaire. Le produit est mis alors à refroidir jusqu'à l'obtention d'une température à coeur inférieure à 6°C.

### Exemple 3 : préparation d'un pudding aux oeufs saveur vanille et d'un pudding aux oeufs saveur chocolat, recouvertes d'une couche de matière alimentaire à base de chocolat

On a préparé les produits alimentaires multicouches dont la composition est indiquée dans le tableau 3 ci-dessous :

**Tableau 3**

| Ingrédients | pudding aux oeufs saveur vanille % en poids | pudding aux oeufs saveur chocolat % en poids |
|---|---|---|
| lait écrémé | 35 à 80 | 35 à 80 |
| sirop de glucose | 0 à 12 | 0 à 12 |
| crème 30% M.G | 1 à 35 | 1 à 35 |
| sucre - saccharose | 4 à 11 | 4 à 11 |
| protéines de lait | 1 à 2 | 1 à 2 |
| amidon modifié E1442 | 0,5 à 2 | 0,5 à 2 |
| arôme et colorant | 0,1 à 0,5 | |
| poudre de cacao à 10-12 ou 20-22% M.G. | | 1 à 3 |
| chocolat | | 1 à 6 |
| oeufs | 10 to 15 | 10 à 15 |
| TOTAL | **100** | **100** |

On procède de la manière suivante :
1-On pré-mélange les ingrédients pulvérulents, puis on humidifie le mélange avec le lait chaud. On ajoute la crème et le chocolat fondu à 38°C, et on soumet à un traitement UHT à 130°C pendant quelques s. Après refroidissement à 50-70°C, on ajoute les oeufs liquides, on remplit le récipient et on cuit au four pendant 20 - 45 min à 85 -95 °C. Les pots sont mis en attente sur un tapis d'accumulation avant le dosage de la couche supérieure. La température du produit ne doit pas être inférieure à 70°C.
2-Pour la couche supérieure, on procède de la manière suivante : on pré-mélange les ingrédients pulvérulents et on ajoute le beurre de cacao et le chocolat fondu à 38°C. Ce mélange subit un traitement thermique de stérilisation à 110°C pendant 10 min. Avant le refroidissement entre 60-70°C, le produit subit un traitement d'homogénéisation afin de rendre le produit lisse. Le stockage se fait en cuve en attente de dosage à une température de 60-70°C. Le transfert vers l'unité de dosage se fait au moyen d'une installation de pompage.
3-Pour le dosage : le récipient en sortie du four est amené sous le doseur de la couche supérieure et on procède à la montée de ce récipient au moyen d'un vérin à une hauteur voulue de la plaque de la buse, soit de 20 à 60 mm. Le dosage de la couche supérieure se fait en même temps que la rotation du pot afin de favoriser l'étalement harmonieux de cette couche, la force centrifuge est alors de 3 à 5 s⁻¹. La température de dosage de la couche supérieure est réglée entre 60 et 75°C. La quantité de couche supérieure déposée est réglée, pour un pot de 100 ml, à 6 à 10 g par pot. On obtient une couche de surface uniforme ayant une épaisseur de 0,5 à 3 mm. A la fin de ce dosage on maintient la rotation du pot jusqu'à la descente du pot et son passage à l'étape de scellage d'un opercule et ensuite de l'emballage et groupage si nécessaire. Le produit est mis alors à refroidir jusqu'à l'obtention d'une température à coeur inférieure à 6°C.

## Revendications

1. Procédé d'obtention d'un produit alimentaire multicouche comprenant au moins une couche inférieure et une couche supérieure, chaque couche étant à base de composants alimentaires thermiquement stables, ledit procédé comprenant les étapes consistant à :
- doser la matière alimentaire constituant la couche supérieure,
- distribuer ladite matière sur la surface d'un produit à recouvrir constituant au moins une couche inférieure préalablement contenu dans un récipient, et
- simultanément, soumettre ledit récipient à une force centrifuge ou alternative,
**caractérisé en ce que** ladite couche inférieure a une faible viscosité, **en ce que** la couche inférieure et la couche supérieure présentent une incompatibilité relative à l'étalement de la couche supérieure, **en ce que** le dosage de la matière alimentaire constituant au moins une couche supérieure est effectué à l'aide d'un piston doseur, la poussée du piston doseur libérant la matière alimentaire constituant au moins une couche supérieure par le seul effet de la force de gravité de ladite matière alimentaire, et **en ce que** ladite matière est distribuée à l'aide d'un boisseau mécanique rotatif à travers une plaque munie d'orifices multiples.

2. Procédé selon la revendication 1, **caractérisé en ce que** ladite couche supérieure est composée de matière grasse.

3. Procédé selon les revendications 1 ou 2, **caractérisé en ce qu'**au moins une couche inférieure est hydrophile et au moins une couche supérieure est hydrophobe.

4. Procédé selon l'une quelconque des revendications 1 à 3, **caractérisé en ce que** ladite couche inférieure a une viscosité d'environ 3000 à 25000 mPa.s, de préférence d'environ 8000 à 20000 mPa.s.

5. Procédé selon l'une quelconque des revendications 1 à 3, **caractérisé en ce que** ladite couche inférieure a une consistance Bostwick supérieure à 8.

6. Procédé selon l'une quelconque des revendications 1 à 5, **caractérisé en ce que** la matière alimentaire constituant la couche supérieure est une matière grasse ou un mélange de matières grasses.

7. Procédé selon la revendication 6, **caractérisé en ce que** ladite matière grasse est choisie parmi le chocolat et les matières grasses végétales.

8. Procédé selon la revendication 6, **caractérisé en ce que** ladite matière grasse est choisie parmi des produits composés à base de chocolat comprenant un mélange de beurre de cacao ou d'une autre matière grasse végétale et de cacao en poudre ou de liqueur de cacao avec une teneur en beurre de cacao ou autre matière grasse végétale de 50 à 100% en poids du mélange.

9. Procédé selon l'une quelconque des revendications 1 à 5, **caractérisé en ce que** la matière alimentaire constituant la couche supérieure est choisie parmi les sirops de sucres, les produits à base de fruits, les produits à base de lait, seuls ou en mélange avec un ou plusieurs additifs alimentaires.

10. Procédé selon l'une quelconque des revendications 1 à 9, **caractérisé en ce que** l'épaisseur de la couche supérieure est comprise entre 0,3 mm et 6 mm, de préférence entre 0,5 et 1,5 mm.

11. Procédé selon l'une quelconque des revendications 1 à 10, **caractérisé en ce que** la matière alimentaire constituant la couche supérieure comprend un ou plusieurs ingrédients choisis parmi les agents épaississants et/ou gélifiants et/ou texturants, les colorants naturels ou artificiels et les arômes naturels ou artificiels.

12. Procédé selon l'une quelconque des revendications 1 à 11, **caractérisé en ce que** la matière alimentaire constituant la couche supérieure comprend des additifs sous forme particulaire tels que des fragments de fruits secs ou confits ; des fragments de noix, de noisettes, d'amandes, d'écorces d'agrumes ; des céréales ou des vermicelles de confiserie.

13. Procédé selon la revendication 12, **caractérisé en ce que** lesdits additifs sous forme particulaire sont traités thermiquement dans la matière alimentaire constituant la couche supérieure.

14. Procédé selon l'une des revendications 12 ou 13, **caractérisé en ce qu'**une seconde couche de matière alimentaire constituant la couche supérieure est déposée et recouvre la première, lesdits additifs solides particulaires se trouvant alors entre les deux couches de surface.

15. Procédé selon l'une des revendications 12 ou 13, **caractérisé en ce qu'**on ajoute lesdits additifs solides particulaires sur la couche de matière alimentaire constituant la couche supérieure après dépose de celle-ci et avant son refroidissement total.

16. Procédé selon l'une quelconque des revendications 1 à 15, **caractérisé en ce que** le produit à recouvrir constituant au moins une couche inférieure est choisi parmi les produit laitiers acides ou fermentés, les mousses, les crèmes, les produits à base de fruits, les produits à base de céréales, les produits fermentés à base de céréales, les produits à base d'œuf et les produits à base de soja.

17. Procédé selon l'une quelconque des revendications 1 à 16, **caractérisé en ce que** la force appliquée au récipient est une force centrifuge de l'ordre de 1 à 5 s⁻¹.

18. Procédé selon l'une quelconque des revendications 1 à 17, **caractérisé en ce que** la température lors de la libération de la matière alimentaire constituant la couche supérieure est de l'ordre de 30 à 75°C.

19. Dispositif pour la mise en œuvre du procédé selon l'une quelconque des revendications 1 à 18, comprenant des moyens de dosage de la matière alimentaire constituant la couche supérieure par le seul effet de la force de gravité de ladite matière alimentaire, et de moyens de positionnement et de mise en mouvement du récipient contenant le produit à recouvrir, **caractérisé en ce qu'**il comprend des moyens de distribution à l'aide d'un boisseau mécanique rotatif à travers une plaque munie d'orifices multiples.

## Patentansprüche

1. Verfahren zum Erhalten eines mehrschichtigen Lebensmittelprodukts, umfassend mindestens eine untere Schicht und eine Deckschicht, wobei jede Schicht auf thermisch stabilen Lebensmittelbestandteilen basiert, wobei das Verfahren die Schritte umfasst:
- Dosieren des die Deckschicht bildenden Lebensmittelmaterials,
- Verteilen des Materials auf der Oberfläche eines zu bedeckenden Produkts, bestehend aus mindestens einer vorher in ein Behältnis eingebrachten unteren Schicht, und
- gleichzeitiges Einwirken einer Zentrifugal- oder Wechselkraft auf das Behältnis,
**dadurch gekennzeichnet, dass** die untere Schicht eine niedrige Viskosität aufweist, **dass** die untere Schicht und die Deckschicht eine Unverträglichkeit bezüglich der Ausbreitung der Deckschicht aufweisen, **dass** die Dosierung des Lebensmittelmaterials, das mindestens eine Deckschicht bildet, unter Verwendung eines Dosierkolbens erfolgt, wobei der Schub des Dosierkolbens das Lebensmittelmaterial, das mindestens eine Deckschicht bildet, allein durch die Wirkung der Schwerkraft des Lebensmittelmaterials freisetzt, und **dass** das Material mithilfe eines rotierenden mechanischen Ventils durch eine Platte verteilt wird, die mit mehreren Öffnungen versehen ist.

2. Verfahren nach Anspruch 1, **dadurch gekennzeichnet, dass** sich die Deckschicht aus Fettstoff zusammensetzt.

3. Verfahren nach Anspruch 1 oder 2, **dadurch gekennzeichnet, dass** mindestens eine untere Schicht hydrophil ist und mindestens eine Deckschicht hydrophob ist.

4. Verfahren nach einem der Ansprüche 1 bis 3,
**dadurch gekennzeichnet, dass** die untere Schicht eine Viskosität von etwa 3000 bis 25000 mPa.s, bevorzugt von etwa 8000 bis 20000 mPa.s, aufweist.

5. Verfahren nach einem der Ansprüche 1 bis 3,
**dadurch gekennzeichnet, dass** die untere Schicht eine Bostwick-Konsistenz von größer als 8 aufweist.

6. Verfahren nach einem der Ansprüche 1 bis 5,
**dadurch gekennzeichnet, dass** das die Deckschicht bildende Lebensmittelmaterial ein Fettstoff oder eine Mischung von Fettstoffen ist.

7. Verfahren nach Anspruch 6, **dadurch gekennzeichnet, dass** der Fettstoff ausgewählt ist aus Schokolade und pflanzlichen Fettstoffen.

8. Verfahren nach Anspruch 6, **dadurch gekennzeichnet, dass** der Fettstoff ausgewählt ist aus Produkten, die auf Schokoladenbasis, umfassend eine Mischung aus Kakaobutter oder einem anderen pflanzlichen Fettstoff, und Kakaopulver oder Kakaolikör zusammengestellt sind, mit einem Gehalt an Kakaobutter oder anderem pflanzlichen Fettstoff von 50 bis 100 %, bezogen auf das Gewicht der Mischung.

9. Verfahren nach einem der Ansprüche 1 bis 5,
**dadurch gekennzeichnet, dass** das die Deckschicht bildende Lebensmittelmaterial ausgewählt ist aus Zuckersirupen, Produkten auf Früchtebasis, Produkten auf Milchbasis, einzeln oder gemischt mit einem oder mehreren Lebensmittelzusätzen.

10. Verfahren nach einem der Ansprüche 1 bis 9,
**dadurch gekennzeichnet, dass** die Dicke der Deckschicht zwischen 0,3 mm und 6 mm, bevorzugt zwischen 0,5 und 1,5 mm, beträgt.

11. Verfahren nach einem der Ansprüche 1 bis 10,
**dadurch gekennzeichnet, dass** das die Deckschicht bildende Lebensmittelmaterial eine oder mehrere Zutaten, ausgewählt aus Verdickungsmitteln und/oder Gelierungsmitteln und/oder Texturierungsmitteln, natürlichen oder künstlichen Farbstoffen und natürlichen oder künstlichen Aromen, umfasst.

12. Verfahren nach einem der Ansprüche 1 bis 11,
**dadurch gekennzeichnet, dass** das die Deckschicht bildende Lebensmittelmaterial teilchenförmige Zusatzstoffe, wie Bruchstücke trockener oder kandierter Früchte; Bruchstücke von Walnüssen, von Haselnüssen, von Mandeln, von Zitrusfruchtschalen; von Getreiden oder von Fadennudeln aus Süßwaren umfasst.

13. Verfahren nach Anspruch 12, **dadurch gekennzeichnet, dass** die teilchenförmigen Zusatzstoffe im die Deckschicht bildenden Lebensmittelmaterial wärmebehandelt werden.

14. Verfahren nach einem der Ansprüche 12 oder 13,
**dadurch gekennzeichnet, dass** eine zweite, die Deckschicht bildende, Lebensmittelmaterialschicht auf der ersten angeordnet ist und diese bedeckt, wobei sich die festen teilchenförmigen Zusatzstoffe zwischen den beiden Oberflächenschichten befinden.

15. Verfahren nach einem der Ansprüche 12 oder 13,
**dadurch gekennzeichnet, dass** die festen teilchenförmigen Zusatzstoffe auf die die Deckschicht bildende Lebensmittelmaterialschicht nach dem Anordnen dieser und vor ihrem vollständigen Abkühlen gegeben werden.

16. Verfahren nach einem der Ansprüche 1 bis 15,
**dadurch gekennzeichnet, dass** das zu beschichtende Produkt, mindestens eine untere Schicht bildend, ausgewählt ist aus sauren oder fermentierten Milchprodukten, Schäumen, Cremes, Produkten auf Fruchtbasis, Produkten auf Getreidebasis, fermentierten Produkten auf Getreidebasis, Produkten auf Eibasis und Produkten auf Sojabasis.

17. Verfahren nach einem der Ansprüche 1 bis 16,
**dadurch gekennzeichnet, dass** die auf das Behältnis angewendete Kraft eine Zentrifugalkraft der Größenordnung 1 bis 5 s⁻¹ ist.

18. Verfahren nach einem der Ansprüche 1 bis 17,
**dadurch gekennzeichnet, dass** die Temperatur beim Freisetzen des die Deckschicht bildenden Lebensmittelmaterials in der Größenordnung von 30 bis 75 °C liegt.

19. Vorrichtung zum Ausführen des Verfahrens nach einem der Ansprüche 1 bis 18, umfassend Mittel zum Dosieren des die Deckschicht bildenden Lebensmittelmaterials allein durch die Schwerkraftwirkung des Lebensmittelmaterials, und Mittel zum Positionieren und zum Bewegen des das zu bedeckende Produkt enthaltende Behältnisses, **dadurch gekennzeichnet, dass** sie Mittel zum Verteilen mittels eines rotierenden mechanischen Ventils durch eine Platte verteilt wird, die mit mehreren Öffnungen versehen ist.

## Claims

1. A method for obtaining a multilayer food product comprising at least a lower layer and an upper layer, each layer being based on thermally stable food components, said method comprising the steps of:
- metering the food material making up the upper layer,
- distributing said material onto the surface of a product to be covered constituting at least one lower layer previously contained in a container; and
- simultaneously subjecting said container to a centrifugal or alternative force,
**characterized in that** said lower layer has a low viscosity, **in that** the lower layer and the upper layer present an incompatibility relative to the spreading of the upper layer, **in that** the metering of the food material making up at least one upper layer is carried out with the aid of a metering piston, the thrust of the metering piston releasing the food material making up at least one upper layer by the sole effect of the force of gravity of said food material, and **in that** said material is dispensed by means of a rotating mechanical valve through a plate provided with multiple orifices.

2. The method according to claim 1, **characterized in that** said upper layer is composed of fat.

3. The method according to claims 1 or 2, **characterized in that** at least one lower layer is hydrophilic and at least one upper layer is hydrophobic.

4. The method according to any one of claims 1 to 3, **characterized in that** said lower layer has a viscosity of about 3000 to 25000 mPa.s, preferably of about 8000 to 20000 mPa.s.

5. The method according to any one of claims 1 to 3, **characterized in that** said lower layer has a Bostwick consistency greater than 8.

6. The method according to any one of claims 1 to 5, **characterized in that** the food material constituting the upper layer is a fat or a mixture of fats.

7. The method according to claim 6, **characterized in that** said fat is selected from chocolate and vegetable fats.

8. The method according to claim 6, **characterized in that** said fat is selected from chocolate-based compound products comprising a mixture of cocoa butter or other vegetable fat and cocoa powder or cocoa liquor with a cocoa butter or other vegetable fat content of 50 to 100% by weight of the mixture.

9. The method according to any one of claims 1 to 5, **characterized in that** the food material making up the upper layer is chosen from sugar syrups, fruit-based products, milk-based products, alone or mixed with one or more food additives.

10. The method according to any one of claims 1 to 9, **characterized in that** the thickness of the upper layer is between 0.3 mm and 6 mm, preferably between 0.5 and 1.5 mm.

11. The method according to any one of claims 1 to 10,
**characterized in that** the food material making up the upper layer comprises one or more ingredients selected from thickening and/or gelling and/or texturizing agents, natural or artificial colorants and natural or artificial flavors.

12. The method according to any one of claims 1 to 11, **characterized in that** the food material making up the upper layer comprises additives in particulate form such as fragments of dried or candied fruit; fragments of nuts, hazelnuts, almonds, citrus peel; cereals or confectionery vermicelli.

13. The method according to claim 12, **characterized in that** said additives in particulate form are heat-treated in the food material making up the upper layer.

14. The method according to one of claims 12 or 13, **characterized in that** a second layer of food material making up the upper layer is deposited and covers the first, said particulate solid additives then lying between the two surface layers.

15. The method according to one of claims 12 or 13, **characterized in that** said particulate solid additives are added to the layer of food material making up the upper layer after the latter has been deposited and before it has cooled completely.

16. The method according to any one of claims 1 to 15,
**characterized in that** the product to be coated making up at least one lower layer is chosen from acid or fermented dairy products, foams, creams, fruit-based products, cereal-based products, fermented cereal-based products, egg-based products and soy-based products.

17. The method according to any one of claims 1 to 16, **characterized in that** the force applied to the container is a centrifugal force of the order of 1 to 5 s⁻¹.

18. The method according to any one of claims 1 to 17,
**characterized in that** the temperature during release of the food material making up the upper layer is in the range from 30 to 75°C.

19. A device for implementing the method according to any one of claims 1 to 18, comprising means for metering the food material making up the upper layer by the sole effect of the force of gravity of said food material, and means for positioning and moving the container containing the product to be coated,
**characterized in that** it comprises means for dispensing by means of a rotating mechanical valve through a plate provided with multiple orifices.
